(19) Europäisches Patentamt
European Patent Office
Office européen des brevets

(11) **EP 4 447 007 B1**

(12) **EUROPEAN PATENT SPECIFICATION**

(45) Date of publication and mention
of the grant of the patent:
**04.06.2025   Bulletin 2025/23**

(21) Application number: **23878711.3**

(22) Date of filing: **30.06.2023**

(51) International Patent Classification (IPC):
*G06V 40/10* (2022.01)          *G06V 10/25* (2022.01)
*G06V 10/44* (2022.01)          *G06V 10/74* (2022.01)

(52) Cooperative Patent Classification (CPC):
**G06V 40/10; G06V 10/25; G06V 10/44; G06V 10/74**

(86) International application number:
**PCT/CN2023/104960**

(87) International publication number:
**WO 2024/082714 (25.04.2024 Gazette 2024/17)**

(54) **DOG NOSEPRINT RECOGNITION METHOD AND SYSTEM**

VERFAHREN UND SYSTEM ZUR ERKENNUNG DES NASENABDRUCKS VON HUNDEN

PROCÉDÉ ET SYSTÈME DE RECONNAISSANCE D'EMPREINTE NASALE DE CHIEN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.10.2022   CN 202211288489**

(43) Date of publication of application:
**16.10.2024   Bulletin 2024/42**

(73) Proprietor: **Xingchong Kingdom (Beijing)
Technology Co., Ltd
Beijing 100071 (CN)**

(72) Inventors:
• **WANG, Yiduan
Beijing 100025 (CN)**
• **SONG, Cheng
Beijing 101309 (CN)**

• **LIU, Baoguo
Xianyang, Shaanxi 713302 (CN)**
• **GUO, Weipeng
Foshan, Guangdong 528010 (CN)**

(74) Representative: **Chung, Hoi Kan
Mandarin IP Limited
7 Cherry Trees
Great Shelford
Cambridge CB22 5XA (GB)**

(56) References cited:
EP-B1- 3 029 603          WO-A1-2007/077694
CN-A- 109 543 663          CN-A- 109 858 363
CN-A- 110 909 618          CN-A- 115 393 904
JP-A- 2007 135 501          KR-A- 20200 041 296
KR-B1- 102 125 633          US-A1- 2021 089 763

**Description**

TECHNICAL FIELD

The present disclosure provides a dog nose print recognition method and a dog nose print recognition system, relating to the field of dog nose print recognition.

BACKGROUND

At present, more and more people have dogs in cities, resulting in more and more dogs in cities. Therefore, there are often problems such as stray dogs cannot be identified, and owners of biting dogs cannot be found. At present, there are mainly two existing solutions, one is the application of a dog certificate, and the other is to inject a chip into the dog. Although the first solution has already been implemented in China for many years, its penetration rate is not very high due to the need to re-examine and pay a certain fee every year. The second solution is harmful to the pet itself, and not everyone can recognize the chip, instead it can only be recognized with the assistance of professional equipment from specific organization, thereby having great limitations.

Therefore, the dog identity recognition methods in the prior art have the disadvantages of low feasibility and great damage to the dog. In the prior art, it lacks an effective method for dog identity recognition.

KR 102 125 633 B1 and CN 109 543 663 A disclose each an animal identification and characterization system and method, comprising the steps of collecting a nose image of a dog, performing alignment processing, performing dog nose print feature vector extraction and recognition on the aligned images, and determining a dog identity recognition result through the dog nose print feature vector extraction and recognition.

CN 109 858 363 A, EP 3 029 603 B1 and WO 2007/077694 A1 disclose different methods for detecting a dog nose pattern information, including key points, regions of interest, edges and contours.

SUMMARY

The present disclosure provides a dog nose print recognition method and system, intended to solve the problems of low feasibility and low identity recognition effectiveness of the dog identity recognition method in the prior art. The adopted technical solutions are as follows:

A dog nose print recognition method, comprising:

collecting a nose image of a dog, acquiring the nose image, and processing the nose image to obtain a plurality of regional images to be recognized;

performing key point detection on the plurality of regional images to be recognized to obtain key points corresponding to the regional images to be recognized, and using the key points to perform alignment processing of the regional images to be recognized to obtain aligned regional images to be recognized; and

performing dog nose print feature vector extraction and recognition on the aligned regional images to be recognized, and determining a dog identity recognition result through the dog nose print feature vector extraction and recognition.

According to some embodiments of the present disclosure, the step of processing the nose image to obtain a plurality of regional images to be recognized comprises:

performing an edge contour process to the nose image to obtain a nose overall region bounded by a nose contour;

performing an image region division process to the nose overall region to obtain the plurality of regional images to be recognized.

According to some embodiments of the present disclosure, the step of performing an image region division process to the nose overall region to obtain the plurality of regional images to be recognized comprises:

recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;

lining a highest point of the contour line of the left nostril with a highest point of the contour line of the right nostril to obtain a horizontal higher line, and extracting a position of an intersection point of the horizontal higher line and the center line of the nose overall region as a first intersection point position;

extracting a position of an intersection point of the center line of the nose overall region and an upper contour line of the nose overall region as a second intersection point position;

lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wherein V represents an included angle between a line connecting the center point with the highest point of the contour line of the left nostril or the highest point of the contour line of the right nostril and the horizontal higher line; $\alpha 1$ and $\alpha 2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha 0$ represents a benchmark comparison value of included angle with a value range of 17.8°-25.2°; and if $\alpha 1$ and $\alpha 2$ are equal, then $(\min(\alpha 1, \alpha 2) - \alpha 0)/(\max(\alpha 1, \alpha 2) - \alpha 0) = 0.1$; R represents the radius; L represents the first the distance between the first intersection point position and the second intersection point position;

taking the center point as a circle center to form a first region to be recognized based on the radius, and utilizing the first region to be recognized to intercept a first regional image to be recognized in the nose overall region;

lining a lowest point of the contour line of the left nostril with a lowest point of the contour line of the right nostril to obtain a horizontal lower line, and extracting a position of an intersection point of the horizontal lower line and the center line of the nose overall region as a third intersection point position;

extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

According to some embodiments of the present disclosure, the step of performing key point detection on the plurality of regional images to be recognized to obtain key points corresponding to the regional images to be recognized, and using the key points to perform alignment processing of the regional images to be recognized to obtain aligned regional images to be recognized comprises:

inputting the plurality of regional images to be recognized into a trained key point detection model in sequence to obtain key points corresponding to the regional image to be recognized;

marking the key points corresponding to each regional image to be recognized with a regional label to obtain the key points with the regional label corresponding to the regional image to be recognized;

extracting a preset key point reference region corresponding to the regional image to be recognized, wherein the key point reference region has the same label as the regional label;

planning the regional image to be recognized with the key points with the regional label to the key point reference region with the same regional label, according to a principle of regional label consistency;

aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

According to some embodiments of the present disclosure, the step of performing dog nose print feature vector extraction and recognition on the aligned regional images to be recognized, and determining a dog identity recognition result through the dog nose print feature vector extraction and recognition comprises:

inputting the aligned regional images to be recognized into a trained feature extraction model to extract a dog nose print feature vector, to obtain a nose print feature vectors of a dog to be tested;

comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;

selecting the target dog nose print feature vector, and retrieving a dog identity information corresponding to the target dog nose print feature vector from the dog nose print feature vector library.

A dog nose print recognition system, comprising:

an image acquisition module, configured for collecting a nose image of a dog, acquiring the nose image, and processing the nose image to obtain a plurality of regional images to be recognized;

a key point acquisition module, configured for performing key point detection on the plurality of regional images to be recognized to obtain key points corresponding to the regional images to be recognized, and using the key points to perform alignment processing of the regional images to be recognized to obtain aligned regional images to be recognized; and

a recognition module, configured for performing dog nose print feature vector extraction and recognition on the aligned regional images to be recognized, and determining a dog identity recognition result through the dog nose print feature vector extraction and recognition.

According to some embodiments of the present disclosure, the image acquisition module comprises:

a contour processing module, configured for performing an edge contour process to the nose image to obtain a nose overall region bounded by a nose contour;

a division processing module, configured for performing an image region division process to the nose overall region to obtain the plurality of regional images to be recognized.

According to some embodiments of the present disclosure, the division processing module comprises:

a first position processing module, configured for recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;

a first intersection point position acquisition module, configured for lining a highest point of the contour line of the left nostril with a highest point of the contour line of the right nostril to obtain a horizontal higher line, and extracting a position of an intersection point of the horizontal higher line and the center line of the nose overall region as a first intersection point position;

a second intersection point position acquisition module, configured for extracting a position of an intersection point of the center line of the nose overall region and an upper contour line of the nose overall region as a second intersection point position;

a second position processing module, configured for lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

a data parameter determination module, configured for utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wherein V represents an included angle between a line connecting the center point with the highest point of the contour line of the left nostril or the highest point of the contour line of the right nostril and the horizontal higher line; $\alpha_1$ and $\alpha_2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha_0$ represents a benchmark comparison value of included angle with a value range of 17.8°-25.2°; and if $\alpha_1$ and $\alpha_2$ are equal, then $(\min(\alpha_1, \alpha_2) - \alpha_0)/(\max(\alpha_1, \alpha_2) - \alpha_0) = 0.1$; R represents the radius; L represents the first the distance between the first intersection point position and the second intersection point position;

a first to-be-recognized regional image acquisition module, configured for taking the center point as a circle center to form a first region to be recognized based on the radius, and utilizing the first region to be recognized to intercept a first regional image to be recognized in the nose overall region;

a third intersection point position acquisition module, configured for lining a lowest point of the contour line of the left nostril with a lowest point of the contour line of the right nostril to obtain a horizontal lower line, and extracting a position of an intersection point of the horizontal lower line and the center line of the nose overall region as a third intersection point position;

a second to-be-recognized regional image acquisition module, configured for extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

According to some embodiments of the present disclosure, the key point acquisition module comprises:

a key point determination module, configured for inputting the plurality of regional images to be recognized into a trained key point detection model in sequence to obtain key points corresponding to the regional image to be recognized;

a first labeling module, configured for marking the key points corresponding to each regional image to be recognized with a regional label to obtain the key points with the regional label corresponding to the regional image to be recognized;

a region extraction module, configured for extracting a preset key point reference region corresponding to the regional image to be recognized, wherein the key point reference region has the same label as the regional label;

a second labeling module, configured for planning the regional image to be recognized with the key points with the regional label to the key point reference region with the same regional label, according to a principle of regional label consistency;

an alignment module, configured for aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

According to some embodiments of the present disclosure, the recognition module comprises:

a vector extraction module, configured for inputting the aligned regional images to be recognized into a trained feature extraction model to extract a dog nose print feature vector, to obtain a nose print feature vectors of a dog to be tested;
a feature comparison module, configured for comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;
an identity recognition module, configured for selecting the target dog nose print feature vector, and retrieving a dog identity information corresponding to the target dog nose print feature vector from the dog nose print feature vector library.

The present disclosure has the following beneficial effects:

The dog nose print recognition method and system proposed by the present disclosure extract a key recognition region of the dog's nose by setting a plurality of regions to be recognized, and realize recognition and detection of dog nose print by recognizing and detecting partial features of the key recognition region. In this way, it can effectively improve the accuracy and efficiency of dog image recognition while reducing the amount of data to be detected.

BRIEF DESCRIPTION OF DRAWINGS

FIG. 1 is a flow chart of a dog nose print recognition method according to the present disclosure;
FIG. 2 is a system block diagram of a dog nose print recognition system according to the present disclosure.

DETAILED DESCRIPTION OF THE EMBODIMENTS

The embodiments of the present disclosure will be described below in conjunction with the accompanying drawings. It should be understood that the embodiments described here are only intended to illustrate and explain the present disclosure, but not intended to limit the present disclosure.

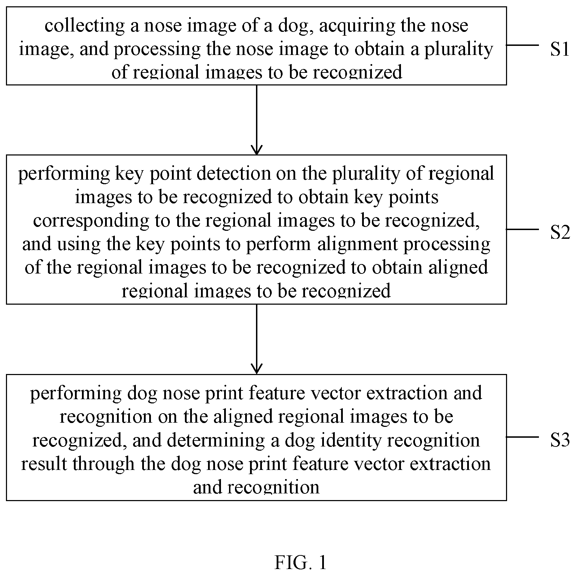

An embodiment of the present disclosure proposes a dog nose print recognition method, as shown in FIG. 1, the dog nose print recognition method includes:

S1: collecting a nose image of a dog, acquiring the nose image, and processing the nose image to obtain a plurality of regional images to be recognized;
S2: performing key point detection on the plurality of regional images to be recognized to obtain key points corresponding to the regional images to be recognized, and using the key points to perform alignment processing of the regional images to be recognized to obtain aligned regional images to be recognized; and
S3: performing dog nose print feature vector extraction and recognition on the aligned regional images to be recognized, and determining a dog identity recognition result through the dog nose print feature vector extraction and recognition.

The working principle of the above-mentioned technical solution is as follows: firstly, collect a nose image of a dog, acquire the nose image, and process the nose image to obtain a plurality of regional images to be recognized; then, perform key point detection on the plurality of regional images to be recognized to obtain key points corresponding to the regional images to be recognized, and use the key points to perform alignment processing of the regional images to be recognized to obtain aligned regional images to be recognized; and finally, perform dog nose print feature vector extraction and recognition on the aligned regional images to be recognized, and determine a dog identity recognition result through the dog nose print feature vector extraction and recognition.

The effect of the above technical solution is: the dog nose print recognition method proposed in this embodiment extracts a key recognition region of the dog's nose by setting a plurality of regions to be recognized, and realizes recognition and detection of dog nose print by recognizing and detecting partial features of the key recognition region. In this way, it can effectively improve the accuracy and efficiency of dog image recognition while reducing the amount of data to be detected.

In one embodiment of the present disclosure, the step of processing the nose image to obtain a plurality of regional images to be recognized comprises:

S101: performing an edge contour process to the nose image to obtain a nose overall region bounded by a nose contour;

S102: performing an image region division process to the nose overall region to obtain the plurality of regional images to be recognized.

Herein, the step of performing an image region division process to the nose overall region to obtain the plurality of regional images to be recognized comprises:

S1021: recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;

S1022: lining a highest point of the contour line of the left nostril with a highest point of the contour line of the right nostril to obtain a horizontal higher line, and extracting a position of an intersection point of the horizontal higher line and the center line of the nose overall region as a first intersection point position;

S1023: extracting a position of an intersection point of the center line of the nose overall region and an upper contour line of the nose overall region as a second intersection point position;

S1024: lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

S1025: utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wherein V represents an included angle between a line connecting the center point with the highest point of the contour line of the left nostril or the highest point of the contour line of the right nostril and the horizontal higher line; $\alpha_1$ and $\alpha_2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha_0$ represents a benchmark comparison value of included angle with a value range of 17.8°-25.2°; and if $\alpha_1$ and $\alpha_2$ are equal, then $(\min(\alpha_1, \alpha_2) - \alpha_0)/(\max(\alpha_1, \alpha_2) - \alpha_0) = 0.1$; R represents the radius; L represents the first the distance between the first intersection point position and the second intersection point position;

S1026: taking the center point as a circle center to form a first region to be recognized based on the radius, and utilizing the first region to be recognized to intercept a first regional image to be recognized in the nose overall region;

S1027: lining a lowest point of the contour line of the left nostril with a lowest point of the contour line of the right nostril to obtain a horizontal lower line, and extracting a position of an intersection point of the horizontal lower line and the center line of the nose overall region as a third intersection point position;

S1028: extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

The working principle of the above technical solution is as follows: firstly, perform an edge contour process to the nose image to obtain a nose overall region bounded by a nose contour; then, perform an image region division process to the nose overall region to obtain the plurality of regional images to be recognized.

Specifically the step of performing an image region division process to the nose overall region to obtain the plurality of regional images to be recognized comprises:

firstly, recognize and mark contour lines of a left nostril and a right nostril in the nose overall region to obtain a position of a contour line of the left nostril and a position of a contour line of the right nostril, and a center line between the left nostril and the right nostril, and take the center line between the left nostril and the right nostril as a center line of the nose overall region;

then, line a highest point of the contour line of the left nostril with a highest point of the contour line of the right nostril to obtain a horizontal higher line, and extract a position of an intersection point of the horizontal higher line and the center line of the nose overall region as a first intersection point position; extract a position of an intersection point of the center line of the nose overall region and an upper contour line of the nose overall region as a second intersection point position; line the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

then, utilize the included angles and a center point-included angle determination model to obtain a position of a center point on the center line of the nose overall region; simultaneously, utilize a distance between the first intersection point position and the second intersection point position in conjunction with a radius determination model to obtain a radius; take the center point as a circle center to form a first region to be recognized based on the radius, and utilize the first region to be recognized to intercept a first regional image to be recognized in the nose overall region; line a lowest point of the contour line of the left nostril with a lowest point of the contour line of the right nostril to obtain a horizontal lower line, and extract a position of an intersection point of the horizontal lower line and the center line of the nose overall region as a third intersection point position;

finally, extract a shortest distance between the lowest point of the contour line of the left nostril and the center line of the nose overall region and a shortest distance between the lowest point of the contour line of the right nostril and the center line of the nose overall region, respectively; take the third intersection point position as a circle center, take the shortest distance between the lowest point of the contour line of the left nostril and the center line of the nose overall region as a major axis and take the shortest distance between the lowest point of the contour line of the right nostril and the center line of the nose overall region as a minor axis, to form a longitudinal elliptical region, utilize the longitudinal elliptical region as a second region to be recognized, and utilize the second region to be recognized to intercept a second regional image to be recognized in the nose overall region.

The effect of the above-mentioned technical solution is: the representativeness and accuracy of image acquisition of the plurality of regional images to be recognized of the dog nose print can be effectively improved through the above-mentioned method, and in this way, the amount of the data to be detected (feature vectors and key points) can be effectively reduced, and the efficiency of data detection can be effectively improved through the reduction of the amount of data, and the problem of low response speed of dog nose print recognition caused by too much data to be detected and compared can be prevented. Further, the positions obtained by the above formula and method can effectively improve its versatility for the shape and size of any dog's nose, and can ensure that the regional images to be recognized with high accuracy and rationality can be obtained for any dog's nose shape and size, and the regional images to be recognized contain a sufficient amount of data (feature vectors and key points) that represent the characteristic of the dog nose print, which can effectively improve the accuracy of dog nose print recognition while reducing the amount of data to be processed.

In one embodiment of the present disclosure, the step of performing key point detection on the plurality of regional images to be recognized to obtain key points corresponding to the regional images to be recognized, and using the key points to perform alignment processing of the regional images to be recognized to obtain aligned regional images to be recognized comprises:

S201: inputting the plurality of regional images to be recognized into a trained key point detection model in sequence to obtain key points corresponding to the regional image to be recognized;
S202: marking the key points corresponding to each regional image to be recognized with a regional label to obtain the key points with the regional label corresponding to the regional image to be recognized;

S203: extracting a preset key point reference region corresponding to the regional image to be recognized, wherein the key point reference region has the same label as the regional label;

S204: planning the regional image to be recognized with the key points with the regional label to the key point reference region with the same regional label, according to a principle of regional label consistency;

S205: aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

The working principle of the above technical solution is as follows: firstly, input the plurality of regional images to be recognized into a trained key point detection model in sequence to obtain key points corresponding to the regional image to be recognized; then, mark the key points corresponding to each regional image to be recognized with a regional label to obtain the key points with the regional label corresponding to the regional image to be recognized; then, extract a preset key point reference region corresponding to the regional image to be recognized, wherein the key point reference region has the same label as the regional label; after that, plan the regional image to be recognized with the key points with the regional label to the key point reference region with the same regional label, according to a principle of regional label consistency; finally, align the key points corresponding to the regional image to be recognized with key point reference positions contained in the corresponding key point reference region, and align the plurality of regional images to be recognized to standard positions of the regional images to be recognized by means of aligning the key points with the key point reference positions.

The effect of the above technical solution is: the above method can effectively improve the accuracy and image recognition efficiency of dog image recognition while reducing the amount of data to be detected.

In one embodiment of the present disclosure, the step of performing dog nose print feature vector extraction and recognition on the aligned regional images to be recognized, and determining a dog identity recognition result through the dog nose print feature vector extraction and recognition comprises:

S301: inputting the aligned regional images to be recognized into a trained feature extraction model to extract a dog nose print feature vector, to obtain a nose print feature vectors of a dog to be tested;

S302: comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;

S303: selecting the target dog nose print feature vector, and retrieving a dog identity information corresponding to the target dog nose print feature vector from the dog nose print feature vector library.

The working principle of the above technical solution is as follows: firstly, input the aligned regional images to be recognized into a trained feature extraction model to extract a dog nose print feature vector, to obtain a nose print feature vectors of a dog to be tested; then, compare the nose print feature vector of the dog to be tested with a reference dog nose print feature vector stored in a preset dog nose print feature vector library in terms of distance, and take the reference dog nose print feature vector with closest distance to the nose print feature vector of the dog to be tested as a target dog nose print feature vector; finally, select the target dog nose print feature vector, and retrieve a dog identity information corresponding to the target dog nose print feature vector from the dog nose print feature vector library.

The effect of the above technical solution is: the above method can effectively improve the accuracy and image recognition efficiency of dog image recognition while reducing the amount of data to be detected.

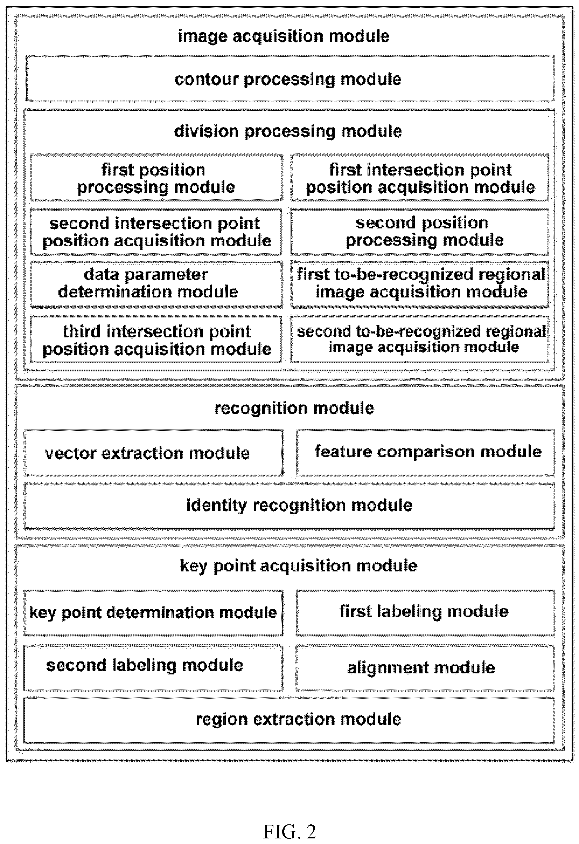

An embodiment of the present disclosure proposes a dog nose print recognition system, as shown in FIG. 2, the dog nose print recognition system includes:

an image acquisition module, configured for collecting a nose image of a dog, acquiring the nose image, and processing the nose image to obtain a plurality of regional images to be recognized;

a key point acquisition module, configured for performing key point detection on the plurality of regional images to be recognized to obtain key points corresponding to the regional images to be recognized, and using the key points to perform alignment processing of the regional images to be recognized to obtain aligned regional images to be recognized; and

a recognition module, configured for performing dog nose print feature vector extraction and recognition on the aligned regional images to be recognized, and determining a dog identity recognition result through the dog nose print feature vector extraction and recognition.

The working principle of the above technical solution is as follows: firstly, an image acquisition module is used to collect a nose image of a dog, acquire the nose image, and process the nose image to obtain a plurality of regional images to be recognized; then, a key point acquisition module is utilized to perform key point detection on the plurality of regional images to be recognized to obtain key points corresponding to the regional images to be recognized, and use the key points to perform alignment processing of the regional images to be recognized to obtain aligned regional images to be recognized; finally, a recognition module is adopted to perform dog nose print feature vector extraction and recognition on the aligned regional images to be recognized, and determine a dog identity recognition result through the dog nose print feature vector extraction and recognition.

The effect of the above technical solution is: the dog nose print recognition system proposed in this embodiment extracts a key recognition region of the dog's nose by setting a plurality of regions to be recognized, and realizes recognition and detection of dog nose print by recognizing and detecting partial features of the key recognition region. In this way, it can effectively improve the accuracy and efficiency of dog image recognition while reducing the amount of data to be detected.

In one embodiment of the present disclosure, the image acquisition module comprises:

a contour processing module, configured for performing an edge contour process to the nose image to obtain a nose overall region bounded by a nose contour;
a division processing module, configured for performing an image region division process to the nose overall region to obtain the plurality of regional images to be recognized.

Herein, the division processing module comprises:

a first position processing module, configured for recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;
a first intersection point position acquisition module, configured for lining a highest point of the contour line of the left nostril with a highest point of the contour line of the right nostril to obtain a horizontal higher line, and extracting a position of an intersection point of the horizontal higher line and the center line of the nose overall region as a first intersection point position;
a second intersection point position acquisition module, configured for extracting a position of an intersection point of the center line of the nose overall region and an upper contour line of the nose overall region as a second intersection point position;
a second position processing module, configured for lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;
a data parameter determination module, configured for utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left( 1 - \frac{\min(\alpha_1, \alpha_2) - \alpha_0}{\max(\alpha_1, \alpha_2) - \alpha_0} \right) \cdot \frac{\min(\alpha_1, \alpha_2)}{1.29 \cdot \max(\alpha_1, \alpha_2)} \cdot \left( \alpha_1 + \frac{\min(\alpha_1, \alpha_2) - \alpha_0}{\alpha_0} \cdot \alpha_2 \right)$$

$$R = \left( 1 + \frac{\min(\alpha_1, \alpha_2)}{1.34 \cdot \max(\alpha_1, \alpha_2)} \right) \cdot L$$

wherein V represents an included angle between a line connecting the center point with the highest point of the contour line of the left nostril or the highest point of the contour line of the right nostril and the horizontal higher line; $\alpha1$ and $\alpha2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha0$ represents a benchmark comparison value of included angle with a value range of 17.8°-25.2°; and if $\alpha1$ and $\alpha2$ are equal, then $(\min(\alpha1, \alpha2)-\alpha0)/(\max(\alpha1, \alpha2)-\alpha0)=0.1$; R represents the radius; L represents the first the distance between the first intersection point position and the second intersection point position;

a first to-be-recognized regional image acquisition module, configured for taking the center point as a circle center to form a first region to be recognized based on the radius, and utilizing the first region to be recognized to intercept a first regional image to be recognized in the nose overall region;

a third intersection point position acquisition module, configured for lining a lowest point of the contour line of the left nostril with a lowest point of the contour line of the right nostril to obtain a horizontal lower line, and extracting a position of an intersection point of the horizontal lower line and the center line of the nose overall region as a third intersection point position;

a second to-be-recognized regional image acquisition module, configured for extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

The working principle of the above technical solution is as follows: firstly, a contour processing module is used to perform an edge contour process to the nose image to obtain a nose overall region bounded by a nose contour; finally, a division processing module is utilized to perform an image region division process to the nose overall region to obtain the plurality of regional images to be recognized.

Herein, the operation process of the division processing module includes:

firstly, a first position processing module is used to recognize and mark contour lines of a left nostril and a right nostril in the nose overall region to obtain a position of a contour line of the left nostril and a position of a contour line of the right nostril, and a center line between the left nostril and the right nostril, and take the center line between the left nostril and the right nostril as a center line of the nose overall region; then, a first intersection point position acquisition module is utilized to line a highest point of the contour line of the left nostril with a highest point of the contour line of the right nostril to obtain a horizontal higher line, and extract a position of an intersection point of the horizontal higher line and the center line of the nose overall region as a first intersection point position; then, a second intersection point position acquisition module is adopted to extract a position of an intersection point of the center line of the nose overall region and an upper contour line of the nose overall region as a second intersection point position; then, a second position processing module is utilized to line the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line; then, a data parameter determination module is adopted to utilize the included angles and a center point-included angle determination model to obtain a position of a center point on the center line of the nose overall region; simultaneously, utilize a distance between the first intersection point position and the second intersection point position in conjunction with a radius determination model to obtain a radius; then, a first to-be-recognized regional image acquisition module is adopted to take the center point as a circle center to form a first region to be recognized based on the radius, and utilize the first region to be recognized to intercept a first regional image to be recognized in the nose overall region; then a third intersection point position acquisition module is adopted to line a lowest point of the contour line of the left nostril with a lowest point of the contour line of the right nostril to obtain a horizontal lower line, and extract a position of an intersection point of the horizontal lower line and the center line of the nose overall region as a third intersection point position; finally, a second to-be-recognized regional image acquisition module is utilized to extract a shortest distance between the lowest point of the contour line of the left nostril and the center line of the nose overall region and a shortest distance between the lowest point of the contour line of the right nostril and the center line of the nose overall region, respectively; take the third intersection point position as a circle center, take the shortest distance between the lowest point of the contour line of the left nostril and the center line of the nose overall region as a major axis and take the shortest distance between the lowest point of the contour line of the right nostril and the center line of the nose overall region as a minor axis, to form a longitudinal elliptical region, utilize the longitudinal elliptical region as a second region to be recognized, and utilize the second region to be recognized to intercept a second regional image to be recognized in the nose overall region.

The effect of the above-mentioned technical solution is: the representativeness and accuracy of image acquisition of the plurality of regional images to be recognized of the dog nose print can be effectively improved through the above-mentioned method, and in this way, the amount of the data to be detected (feature vectors and key points) can be effectively reduced, and the efficiency of data detection can be effectively improved through the reduction of the amount of data, and the problem of low response speed of dog nose print recognition caused by too much data to be detected and compared can be prevented. Further, the positions obtained by the above formula and method can effectively improve its versatility for the shape and size of any dog's nose, and can ensure that the regional images to be recognized with high accuracy and rationality can be obtained for any dog's nose shape and size, and the regional images to be recognized contain a sufficient amount of data (feature vectors and key points) that represent the characteristic of the dog nose print, which can effectively improve the accuracy of dog nose print recognition while reducing the amount of data to be processed.

In one embodiment of the present disclosure, the key point acquisition module comprises:

a key point determination module, configured for inputting the plurality of regional images to be recognized into a trained key point detection model in sequence to obtain key points corresponding to the regional image to be recognized;

a first labeling module, configured for marking the key points corresponding to each regional image to be recognized with a regional label to obtain the key points with the regional label corresponding to the regional image to be recognized;

a region extraction module, configured for extracting a preset key point reference region corresponding to the regional image to be recognized, wherein the key point reference region has the same label as the regional label;

a second labeling module, configured for planning the regional image to be recognized with the key points with the regional label to the key point reference region with the same regional label, according to a principle of regional label consistency;

an alignment module, configured for aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

The working principle of the above technical solution is as follows: firstly, a key point determination module is used to input the plurality of regional images to be recognized into a trained key point detection model in sequence to obtain key points corresponding to the regional image to be recognized; then a first labeling module is utilized to mark the key points corresponding to each regional image to be recognized with a regional label to obtain the key points with the regional label corresponding to the regional image to be recognized; then a region extraction module is adopted to extract a preset key point reference region corresponding to the regional image to be recognized, wherein the key point reference region has the same label as the regional label; then, a second labeling module is adopted to plan the regional image to be recognized with the key points with the regional label to the key point reference region with the same regional label, according to a principle of regional label consistency; finally, an alignment module is utilized to align the key points corresponding to the regional image to be recognized with key point reference positions contained in the corresponding key point reference region, and align the plurality of regional images to be recognized to standard positions of the regional images to be recognized by means of aligning the key points with the key point reference positions.

The effect of the above technical solution is: the above method can effectively improve the accuracy and image recognition efficiency of dog image recognition while reducing the amount of data to be detected.

In one embodiment of the present disclosure, the recognition module comprises:

a vector extraction module, configured for inputting the aligned regional images to be recognized into a trained feature extraction model to extract a dog nose print feature vector, to obtain a nose print feature vectors of a dog to be tested;

a feature comparison module, configured for comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;

an identity recognition module, configured for selecting the target dog nose print feature vector, and retrieving a dog identity information corresponding to the target dog nose print feature vector from the dog nose print feature vector library.

The working principle of the above technical solution is as follows: firstly, a vector extraction module is adopted to input the aligned regional images to be recognized into a trained feature extraction model to extract a dog nose print feature vector, to obtain a nose print feature vectors of a dog to be tested; then, a feature comparison module is utilized to compare the nose print feature vector of the dog to be tested with a reference dog nose print feature vector stored in a preset dog nose print feature vector library in terms of distance, and take the reference dog nose print feature vector with closest distance to the nose print feature vector of the dog to be tested as a target dog nose print feature vector; finally, an identity recognition module is utilized to select the target dog nose print feature vector, and retrieve a dog identity information corresponding to the target dog nose print feature vector from the dog nose print feature vector library.

The effect of the above technical solution is: the above method can effectively improve the accuracy and image recognition efficiency of dog image recognition while reducing the amount of data to be detected.

Obviously, various changes and modifications may be made to the present disclosure by those skilled in the art, without departing from the scope of the present disclosure. Thus, if these modifications and variations of the present disclosure fall within the scope of the claims of the present disclosure then the present disclosure also intends to include these modifications and variations. The invention is defined by the appended claims.

## Claims

1. A dog nose print recognition method, comprising:

collecting a nose image of a dog, acquiring the nose image, and processing the nose image to obtain a plurality of regional images to be recognized;

performing key point detection on the plurality of regional images to be recognized to obtain key points corresponding to the regional images to be recognized, and using the key points to perform alignment processing of the regional images to be recognized to obtain aligned regional images to be recognized; and

performing dog nose print feature vector extraction and recognition on the aligned regional images to be recognized, and determining a dog identity recognition result through the dog nose print feature vector extraction and recognition,

wherein the step of processing the nose image to obtain a plurality of regional images to be recognized comprises:

performing an edge contour process to the nose image to obtain a nose overall region bounded by a nose contour;

performing an image region division process to the nose overall region to obtain the plurality of regional images to be recognized, comprising:

recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;

lining a highest point of the contour line of the left nostril with a highest point of the contour line of the right nostril to obtain a horizontal higher line, and extracting a position of an intersection point of the horizontal higher line and the center line of the nose overall region as a first intersection point position;

extracting a position of an intersection point of the center line of the nose overall region and an upper contour line of the nose overall region as a second intersection point position;

lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wherein V represents an included angle between a line connecting the center point with the highest point of the contour line of the left nostril or the highest point of the contour line of the right nostril and the horizontal higher line; $\alpha_1$ and $\alpha_2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha_0$ represents a benchmark comparison value of included angle with a value range of 17.8°- 25.2°; and if $\alpha_1$ and $\alpha_2$ are equal, then $(\min(\alpha_1, \alpha_2)-\alpha_0)/(\max(\alpha_1, \alpha_2)-\alpha_0)=0.1$; R represents the radius; L represents the first the distance between the first intersection point position and the second intersection point position; taking the center point as a circle center to form a first region to be recognized based on the radius, and utilizing the first region to be recognized to intercept a first regional image to be recognized in the nose overall region;

lining a lowest point of the contour line of the left nostril with a lowest point of the contour line of the right nostril to obtain a horizontal lower line, and extracting a position of an intersection point of the horizontal lower line and the center line of the nose overall region as a third intersection point position;

extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

2. The dog nose print recognition method according to claim 1, wherein the step of performing key point detection on the plurality of regional images to be recognized to obtain key points corresponding to the regional images to be recognized, and using the key points to perform alignment processing of the regional images to be recognized to obtain aligned regional images to be recognized comprises:

inputting the plurality of regional images to be recognized into a trained key point detection model in sequence to obtain key points corresponding to the regional image to be recognized;

marking the key points corresponding to each regional image to be recognized with a regional label to obtain the key points with the regional label corresponding to the regional image to be recognized;

extracting a preset key point reference region corresponding to the regional image to be recognized, wherein the key point reference region has the same label as the regional label;

planning the regional image to be recognized with the key points with the regional label to the key point reference region with the same regional label, according to a principle of regional label consistency;

aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

3. The dog nose print recognition method according to claim 1, wherein the step of performing dog nose print feature vector extraction and recognition on the aligned regional images to be recognized, and determining a dog identity recognition result through the dog nose print feature vector extraction and recognition comprises:

inputting the aligned regional images to be recognized into a trained feature extraction model to extract a dog nose print feature vector, to obtain a nose print feature vectors of a dog to be tested;

comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;

selecting the target dog nose print feature vector, and retrieving a dog identity information corresponding to the target dog nose print feature vector from the dog nose print feature vector library.

4. A dog nose print recognition system, comprising:

an image acquisition module, configured for collecting a nose image of a dog, acquiring the nose image, and processing the nose image to obtain a plurality of regional images to be recognized;

a key point acquisition module, configured for performing key point detection on the plurality of regional images to be recognized to obtain key points corresponding to the regional images to be recognized, and using the key points to perform alignment processing of the regional images to be recognized to obtain aligned regional images to be recognized; and

a recognition module, configured for performing dog nose print feature vector extraction and recognition on the aligned regional images to be recognized, and determining a dog identity recognition result through the dog nose print feature vector extraction and recognition,

wherein the image acquisition module comprises:

a contour processing module, configured for performing an edge contour process to the nose image to obtain a nose overall region bounded by a nose contour;

a division processing module, configured for performing an image region division process to the nose overall region to obtain the plurality of regional images to be recognized, and comprising:

a first position processing module, configured for recognizing and marking contour lines of a left nostril and a right nostril in the nose overall region to obtain a position of a contour line of the left nostril and a position of a contour line of the right nostril, and a center line between the left nostril and the right nostril, and taking the center line between the left nostril and the right nostril as a center line of the nose overall region;

a first intersection point position acquisition module, configured for lining a highest point of the contour line of the left nostril with a highest point of the contour line of the right nostril to obtain a horizontal higher line, and extracting a position of an intersection point of the horizontal higher line and the center line of the nose overall region as a first intersection point position;

a second intersection point position acquisition module, configured for extracting a position of an intersection point of the center line of the nose overall region and an upper contour line of the nose overall region as a second intersection point position;

a second position processing module, configured for lining the highest point of the contour line of the left nostril and the highest point of the contour line of the right nostril with the second intersection point position respectively, to respectively obtain an included angle between a line connecting the highest point of the contour line of the left nostril with the second intersection point position and the horizontal higher line, and an included angle between a line connecting the highest point of the contour line of the right nostril with the second intersection point position and the horizontal higher line;

a data parameter determination module, configured for utilizing the included angles and a center point-included angle determination model to obtain a position of a center point on the center line of the nose overall region; simultaneously, utilizing a distance between the first intersection point position and the second intersection point position in conjunction with a radius determination model to obtain a radius, wherein the center point-included angle determination model and the radius determination model are as follows respectively:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wherein V represents an included angle between a line connecting the center point with the highest point of the contour line of the left nostril or the highest point of the contour line of the right nostril and the horizontal higher line; $\alpha_1$ and $\alpha_2$ respectively represent the included angle between the line connecting the highest point of the contour line of the left nostril with the second intersection point position and the horizontal higher line, and the included angle between the line connecting the highest point of the contour line of the right nostril with the second intersection point position and the horizontal higher line; $\alpha_0$ represents a benchmark comparison value of included angle with a value range of 17.8°- 25.2°; and if $\alpha_1$ and $\alpha_2$ are equal, then $(\min(\alpha_1, \alpha_2)-\alpha_0)/(\max(\alpha_1, \alpha_2)-\alpha_0)=0.1$; R represents the radius; L represents the first the distance between the first intersection point position and the second intersection point position;
a first to-be-recognized regional image acquisition module, configured for taking the center point as a circle center to form a first region to be recognized based on the radius, and utilizing the first region to be recognized to intercept a first regional image to be recognized in the nose overall region;
a third intersection point position acquisition module, configured for lining a lowest point of the contour line of the left nostril with a lowest point of the contour line of the right nostril to obtain a horizontal lower line, and extracting a position of an intersection point of the horizontal lower line and the center line of the nose overall region as a third intersection point position;
a second to-be-recognized regional image acquisition module, configured for extracting a shortest distance between the lowest point of the contour line of the left nostril and the center line of the nose overall region and a shortest distance between the lowest point of the contour line of the right nostril and the center line of the nose overall region, respectively; taking the third intersection point position as a circle center, taking the shortest distance between the lowest point of the contour line of the left nostril and the center line of the nose overall region as a major axis and taking the shortest distance between the lowest point of the contour line of the right nostril and the center line of the nose overall region as a minor axis, to form a longitudinal elliptical region, utilizing the longitudinal elliptical region as a second region to be recognized, and utilizing the second region to be recognized to intercept a second regional image to be recognized in the nose overall region.

5. The dog nose print recognition system according to claim 4, wherein the key point acquisition module comprises:

a key point determination module, configured for inputting the plurality of regional images to be recognized into a trained key point detection model in sequence to obtain key points corresponding to the regional image to be recognized;
a first labeling module, configured for marking the key points corresponding to each regional image to be recognized with a regional label to obtain the key points with the regional label corresponding to the regional image to be recognized;
a region extraction module, configured for extracting a preset key point reference region corresponding to the regional image to be recognized, wherein the key point reference region has the same label as the regional label;
a second labeling module, configured for planning the regional image to be recognized with the key points with the regional label to the key point reference region with the same regional label, according to a principle of regional label consistency;
an alignment module, configured for aligning the key points corresponding to the regional image to be recognized with key point reference positions contained in the corresponding key point reference region, and aligning the plurality of regional images to be recognized to standard positions of the regional images to be recognized by means of aligning the key points with the key point reference positions.

6. The dog nose print recognition system according to claim 4, wherein the recognition module comprises:

a vector extraction module, configured for inputting the aligned regional images to be recognized into a trained feature extraction model to extract a dog nose print feature vector, to obtain a nose print feature vectors of a dog to be tested;
a feature comparison module, configured for comparing the nose print feature vector of the dog to be tested with a reference dog nose print feature vector stored in a preset dog nose print feature vector library in terms of distance, and taking the reference dog nose print feature vector with closest distance to the nose print feature vector of the dog to be tested as a target dog nose print feature vector;

an identity recognition module, configured for selecting the target dog nose print feature vector, and retrieving a dog identity information corresponding to the target dog nose print feature vector from the dog nose print feature vector library.

**Patentansprüche**

1. Hundenasenabdruck-Erkennungsverfahren, umfassend:

Erheben eines Nasenbilds eines Hunds, Erfassen des Nasenbilds und Verarbeiten des Nasenbilds, um eine Vielzahl von zu erkennenden regionalen Bildern zu erhalten;

Durchführen einer Schlüsselpunkterkennung auf der Vielzahl der zu erkennenden regionalen Bilder, um Schlüsselpunkte zu erhalten, die den zu erkennenden regionalen Bildern entsprechen, und Verwenden der Schlüsselpunkte, um die Ausrichtungsverarbeitung der zu erkennenden regionalen Bilder durchzuführen, um zu erkennende ausgerichtete regionale Bilder zu erhalten, und

Durchführen einer Hundenasendruck-Merkmalsvektorextraktion und -erkennung auf den zu erkennenden ausgerichteten regionalen Bildern und Bestimmen eines Hundeidentitätserkennungsergebnisses durch die Hundenasendruck-Merkmalsvektorextraktion und -erkennung,

wobei der Schritt zum Verarbeiten des Nasenbilds, um eine Vielzahl von zu erkennenden regionalen Bildern zu erhalten, Folgendes umfasst:

Durchführen eines Kantenkonturprozesses für das Nasenbild, um eine Nasengesamtregion zu erhalten, die durch eine Nasenkontur begrenzt ist;

Durchführen eines Bildregion-Teilungsprozesses für die Nasengesamtregion, um die Vielzahl der zu erkennenden regionalen Bilder zu erhalten, umfassend:

Erkennen und Markieren von Konturlinien eines linken Nasenlochs und eines rechten Nasenlochs in der Nasengesamtregion, um eine Position einer Konturlinie des linken Nasenlochs und eine Position einer Konturlinie des rechten Nasenlochs und eine Mittellinie zwischen dem linken Nasenloch und dem rechten Nasenloch zu erhalten, und Heranziehen der Mittellinie zwischen dem linken Nasenloch und dem rechten Nasenloch als Mittellinie der Nasengesamtregion;

Abgleichen eines höchsten Punkts der Konturlinie des linken Nasenlochs mit einem höchsten Punkt der Konturlinie des rechten Nasenlochs, um eine horizontale höhere Linie zu erhalten, und Extrahieren einer Position eines Schnittpunkts der horizontalen höheren Linie und der Mittellinie der Nasengesamtregion als erste Schnittpunktposition;

Extrahieren einer Position eines Schnittpunkts der Mittellinie der Nasengesamtregion und einer oberen Konturlinie der Nasengesamtregion als zweite Schnittpunktposition;

Abgleichen jeweils des höchsten Punkts der Konturlinie des linken Nasenlochs und des höchsten Punkts der Konturlinie des rechten Nasenlochs mit der zweiten Schnittpunktposition, um einen eingeschlossenen Winkel zwischen einer Linie, die den höchsten Punkt der Konturlinie des linken Nasenlochs mit der zweiten Schnittpunktposition und der horizontalen höheren Linie verbindet, und einen eingeschlossener Winkel zwischen einer Linie, die den höchsten Punkt der Konturlinie des rechten Nasenlochs mit der zweiten Schnittpunktposition und der horizontalen höheren Linie verbindet, zu erhalten;

Verwenden der eingeschlossenen Winkel und eines mittelpunkteinschließenden Winkelbestimmungsmodells, um eine Position eines Mittelpunkts auf der Mittellinie der Nasengesamtregion zu erhalten, indem gleichzeitig ein Abstand zwischen der ersten Schnittpunktposition und der zweiten Schnittpunktposition in Verbindung mit einem Radiusbestimmungsmodell, um einen Radius zu erhalten, verwendet wird, wobei das mittelpunkteinschließende Winkelbestimmungsmodell und das Radiusbestimmungsmodell jeweils wie folgt sind:

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

wobei V einen eingeschlossenen Winkel zwischen einer Linie darstellt, die den Mittelpunkt mit dem höchsten Punkt der Konturlinie des linken Nasenlochs oder dem höchsten Punkt der Konturlinie des rechten Nasenlochs und der horizontalen höheren Linie verbindet; $\alpha_1$ und $\alpha_2$ jeweils den eingeschlossenen Winkel zwischen der Linie, die den höchsten Punkt der Konturlinie des linken Nasenlochs mit der zweiten Schnittpunktposition und der horizontalen höheren Linie verbindet, und den eingeschlossenen Winkel zwischen der Linie, die den höchsten Punkt der Konturlinie des rechten Nasenlochs mit der zweiten Schnittpunktposition und der horizontalen höheren Linie verbindet, darstellen; $\alpha_0$ einen Benchmark-Vergleichswert des eingeschlossenen Winkels mit einem Wertebereich von 17,8° bis 25,2° darstellt, und wenn $\alpha_1$ und $\alpha_2$ gleich sind, $(\min(\alpha_1, \alpha_2) - \alpha_0)/(\max(\alpha_1, \alpha_2) - \alpha_0) = 0,1$; R den Radius darstellt; L den ersten Abstand zwischen der ersten Schnittpunktposition und der zweiten Schnittpunktposition darstellt;

Heranziehen des Mittelpunkts als Kreiszentrum, um eine auf dem Radius basierend zu erkennende erste Region zu bilden, und Verwenden der ersten zu erkennenden Region, um ein erstes regionales, in der Nasengesamtregion zu erkennendes Bild abzufangen;

Abgleichen eines niedrigsten Punkts der Konturlinie des linken Nasenlochs mit einem niedrigsten Punkt der Konturlinie des rechten Nasenlochs, um eine horizontale niedrigere Linie zu erhalten, und Extrahieren einer Position eines Schnittpunkts der horizontalen niedrigeren Linie und der Mittellinie der Nasengesamtregion als dritte Schnittpunktposition;

Extrahieren eines kürzesten Abstands jeweils zwischen dem niedrigsten Punkt der Konturlinie des linken Nasenlochs und der Mittellinie der Nasengesamtregion und eines kürzesten Abstands zwischen dem niedrigsten Punkt der Konturlinie des rechten Nasenlochs und der Mittellinie der Nasengesamtregion; Heranziehen der dritten Schnittpunktposition als Kreiszentrum, Heranziehen des kürzesten Abstands zwischen dem niedrigsten Punkt der Konturlinie des linken Nasenlochs und der Mittellinie der Nasengesamtregion als Hauptachse und Heranziehen des kürzesten Abstands zwischen dem niedrigsten Punkt der Konturlinie des rechten Nasenlochs und der Mittellinie der Nasengesamtregion als Nebenachse, um eine elliptische Längsregion zu bilden, Verwenden der elliptischen Längsregion als zu erkennende zweite Region und Verwenden der zu erkennenden zweiten Region, um ein zu erkennendes zweites regionales Bild in der Nasengesamtregion abzufangen.

2. Hundenasenabdruck-Erkennungsverfahren nach Anspruch 1, wobei der Schritt zum Durchführen einer Schlüsselpunkterkennung auf der Vielzahl der zu erkennenden regionalen Bilder, um Schlüsselpunkte zu erhalten, die den zu erkennenden regionalen Bildern entsprechen, und Verwenden der Schlüsselpunkte, um die Ausrichtungsverarbeitung der zu erkennenden regionalen Bilder durchzuführen, um zu erkennende ausgerichtete regionale Bilder zu erhalten, Folgendes umfasst:

Eingeben der Vielzahl von zu erkennenden regionalen Bildern in ein trainiertes Schlüsselpunkterkennungsmodell nacheinander, um Schlüsselpunkte zu erhalten, die dem zu erkennenden regionalen Bild entsprechen;

Markieren der Schlüsselpunkte, die jedem zu erkennenden regionalen Bild entsprechen, mit einer regionalen Kennzeichnung, um die Schlüsselpunkte mit der regionalen Kennzeichnung entsprechend dem zu erkennenden regionalen Bild zu erhalten;

Extrahieren einer voreingestellten Schlüsselpunktreferenzregion, die dem zu erkennenden regionalen Bild entspricht, wobei die Schlüsselpunktreferenzregion die gleiche Kennzeichnung wie die regionale Kennzeichnung aufweist;

Planen des zu erkennenden regionalen Bilds mit den Schlüsselpunkten mit der regionalen Kennzeichnung zur Schlüsselpunktreferenzregion mit der gleichen regionalen Kennzeichnung nach einem Grundsatz der regionalen Kennzeichnungsübereinstimmung;

Ausrichten der dem zu erkennenden regionalen Bild entsprechenden Schlüsselpunkte mit den Schlüsselpunktreferenzpositionen, die in der entsprechenden Schlüsselpunktreferenzregion enthalten sind, und Ausrichten der Vielzahl von zu erkennenden regionalen Bildern mit Standardpositionen der zu erkennenden regionalen Bilder mittels des Ausrichtens der Schlüsselpunkte mit den Schlüsselpunktreferenzpositionen.

3. Hundenasenabdruck-Erkennungsverfahren nach Anspruch 1, wobei der Schritt zum Durchführen einer Hundenasendruck-Merkmalsvektorextraktion und -erkennung auf den zu erkennenden ausgerichteten regionalen Bildern und Bestimmen eines Hundeidentitätserkennungsergebnisses durch die Hundenasendruck-Merkmalsvektorextraktion und -erkennung Folgendes umfasst:

Eingeben der zu erkennenden ausgerichteten regionalen Bilder in ein trainiertes Merkmalsextraktionsmodell, um einen Hundenasenabdruck-Merkmalsvektor zu extrahieren, um Nasenabdruck-Merkmalsvektoren eines zu testenden Hunds zu erhalten;

Vergleichen des Nasenabdruck-Merkmalsvektors des zu testenden Hunds mit einem Referenz-Hundenasenabdruck-Merkmalsvektor, der in einer voreingestellten Hundenasenabdruck-Merkmalsvektor-Bibliothek gespeichert ist, in Bezug auf den Abstand und Heranziehen des Referenz-Hundenasenabdruck-Merkmalsvektors mit dem nächsten Abstand zum Nasenabdruck-Merkmalsvektor des zu testenden Hunds als Ziel-Hundenasenabdruck-Merkmalsvektor;

Auswählen des Ziel-Hundenasenabdruck-Merkmalsvektors und Abrufen von Hundeidentitätsinformationen, die dem Ziel-Hundenasenabdruck-Merkmalsvektor entsprechen, aus der Hundenasenabdruck-Merkmalsvektorbibliothek.

4. Hundenasenabdruck-Erkennungssystem, umfassend:

ein Bilderfassungsmodul, das zum Erheben eines Nasenbilds eines Hunds, Erfassen des Nasenbilds und Verarbeiten des Nasenbilds, um eine Vielzahl von zu erkennenden regionalen Bildern zu erhalten, ausgelegt ist;

ein Schlüsselpunkterfassungsmodul, das zum Durchführen einer Schlüsselpunkterkennung auf der Vielzahl der zu erkennenden regionalen Bilder, um Schlüsselpunkte zu erhalten, die den zu erkennenden regionalen Bildern entsprechen, und Verwenden der Schlüsselpunkte, um die Ausrichtungsverarbeitung der zu erkennenden regionalen Bilder durchzuführen, um zu erkennende ausgerichtete regionale Bilder zu erhalten, ausgelegt ist, und

ein Erkennungsmodul, das zum Durchführen einer Hundenasendruck-Merkmalsvektorextraktion und -erkennung auf den zu erkennenden ausgerichteten regionalen Bildern und Bestimmen eines Hundeidentitätserkennungsergebnisses durch die Hundenasendruck-Merkmalsvektorextraktion und -erkennung ausgelegt ist,

wobei das Bilderfassungsmodul Folgendes umfasst:

ein Konturverarbeitungsmodul, das zum Durchführen eines Kantenkonturprozesses für das Nasenbild, um eine Nasengesamtregion zu erhalten, die durch eine Nasenkontur begrenzt ist, ausgelegt ist;

ein Teilungsverarbeitungsmodul, das zum Durchführen eines Bildregion-Teilungsprozesses für die Nasengesamtregion, um die Vielzahl der zu erkennenden regionalen Bilder zu erhalten, ausgelegt ist und Folgendes umfasst:

ein erstes Positionsverarbeitungsmodul, das zum Erkennen und Markieren von Konturlinien eines linken Nasenlochs und eines rechten Nasenlochs in der Nasengesamtregion, um eine Position einer Konturlinie des linken Nasenlochs und eine Position einer Konturlinie des rechten Nasenlochs und eine Mittellinie zwischen dem linken Nasenloch und dem rechten Nasenloch zu erhalten, und Heranziehen der Mittellinie zwischen dem linken Nasenloch und dem rechten Nasenloch als Mittellinie der Nasengesamtregion ausgelegt ist;

ein erstes Schnittpunktpositionserfassungsmodul, das zum Abgleichen eines höchsten Punkts der Konturlinie des linken Nasenlochs mit einem höchsten Punkt der Konturlinie des rechten Nasenlochs, um eine horizontale höhere Linie zu erhalten, und Extrahieren einer Position eines Schnittpunkts der horizontalen höheren Linie und der Mittellinie der Nasengesamtregion als erste Schnittpunktposition ausgelegt ist;

ein zweites Schnittpunktpositionserfassungsmodul, das zum Extrahieren einer Position eines Schnittpunkts der Mittellinie der Nasengesamtregion und einer oberen Konturlinie der Nasengesamtregion als zweite Schnittpunktposition ausgelegt ist;

ein zweites Positionsverarbeitungsmodul, das zum Abgleichen jeweils des höchsten Punkts der Konturlinie des linken Nasenlochs und des höchsten Punkts der Konturlinie des rechten Nasenlochs mit der zweiten Schnittpunktposition, um einen eingeschlossenen Winkel zwischen einer Linie, die den höchsten Punkt der Konturlinie des linken Nasenlochs mit der zweiten Schnittpunktposition und der horizontalen höheren Linie verbindet, und einen eingeschlossener Winkel zwischen einer Linie, die den höchsten Punkt der Konturlinie des rechten Nasenlochs mit der zweiten Schnittpunktposition und der horizontalen höheren Linie verbindet, zu erhalten ausgelegt ist;

ein Datenparameterbestimmungsmodul, das zum Verwenden der eingeschlossenen Winkel und eines mittelpunkteinschließenden Winkelbestimmungsmodells, um eine Position eines Mittelpunkts auf der Mittellinie der Nasengesamtregion zu erhalten, ausgelegt ist, indem gleichzeitig ein Abstand zwischen der ersten Schnittpunktposition und der zweiten Schnittpunktposition in Verbindung mit einem Radiusbestimmungsmodell, um einen Radius zu erhalten, verwendet wird, wobei das mittelpunkteinschließende Winkelbestimmungsmodell und das Radiusbestimmungsmodell jeweils wie folgt sind:

$$V = \left(1 - \frac{\min(\alpha_1,\alpha_2) - \alpha_0}{\max(\alpha_1,\alpha_2) - \alpha_0}\right) \cdot \frac{\min(\alpha_1,\alpha_2)}{1.29 \cdot \max(\alpha_1,\alpha_2)} \cdot \left(\alpha_1 + \frac{\min(\alpha_1,\alpha_2) - \alpha_0}{\alpha_0} \cdot \alpha_2\right)$$

$$R = \left(1 + \frac{\min(\alpha_1,\alpha_2)}{1.34 \cdot \max(\alpha_1,\alpha_2)}\right) \cdot L$$

wobei V einen eingeschlossenen Winkel zwischen einer Linie darstellt, die den Mittelpunkt mit dem höchsten Punkt der Konturlinie des linken Nasenlochs oder dem höchsten Punkt der Konturlinie des rechten Nasenlochs und der horizontalen höheren Linie verbindet; $\alpha_1$ und $\alpha_2$ jeweils den eingeschlossenen Winkel zwischen der Linie, die den höchsten Punkt der Konturlinie des linken Nasenlochs mit der zweiten Schnittpunktposition und der horizontalen höheren Linie verbindet, und den eingeschlossenen Winkel zwischen der Linie, die den höchsten Punkt der Konturlinie des rechten Nasenlochs mit der zweiten Schnittpunktposition und der horizontalen höheren Linie verbindet, darstellen; $\alpha_0$ einen Benchmark-Vergleichswert des eingeschlossenen Winkels mit einem Wertebereich von 17,8° bis 25,2° darstellt, und wenn $\alpha_1$ and $\alpha_2$ gleich sind, dann $(\min(\alpha_1, \alpha_2)-\alpha_0)/(\max(\alpha_1, \alpha_2)-\alpha_0) = 0{,}1$; R den Radius darstellt; L den ersten Abstand zwischen der ersten Schnittpunktposition und der zweiten Schnittpunktposition darstellt;

ein erstes Erfassungsmodul eines zu erkennenden regionalen Bilds, das zum Heranziehen des Mittelpunkts als Kreiszentrum, um eine auf dem Radius basierend zu erkennende erste Region zu bilden, und Verwenden der ersten zu erkennenden Region, um ein erstes regionales, in der Nasengesamtregion zu erkennendes Bild abzufangen, ausgelegt ist;

ein drittes Schnittpunktpositionserfassungsmodul, das zum Abgleichen eines niedrigsten Punkts der Konturlinie des linken Nasenlochs mit einem niedrigsten Punkt der Konturlinie des rechten Nasenlochs, um eine horizontale niedrigere Linie zu erhalten, und Extrahieren einer Position eines Schnittpunkts der horizontalen niedrigeren Linie und der Mittellinie der Nasengesamtregion als dritte Schnittpunktposition ausgelegt ist;

ein zweites Erfassungsmodul eines zu erkennenden regionalen Bilds, das zum Extrahieren eines kürzesten Abstands jeweils zwischen dem niedrigsten Punkt der Konturlinie des linken Nasenlochs und der Mittellinie der Nasengesamtregion und eines kürzesten Abstands zwischen dem niedrigsten Punkt der Konturlinie des rechten Nasenlochs und der Mittellinie der Nasengesamtregion, Heranziehen der dritten Schnittpunktposition als Kreiszentrum, Heranziehen des kürzesten Abstands zwischen dem niedrigsten Punkt der Konturlinie des linken Nasenlochs und der Mittellinie der Nasengesamtregion als Hauptachse und Heranziehen des kürzesten Abstands zwischen dem niedrigsten Punkt der Konturlinie des rechten Nasenlochs und der Mittellinie der Nasengesamtregion als Nebenachse, um eine elliptische Längsregion zu bilden, Verwenden der elliptischen Längsregion als zweite zu erkennende Region und Verwenden der zweiten zu erkennenden Region, um ein zu erkennendes zweites regionales Bild in der Nasengesamtregion abzufangen, ausgelegt ist.

**5.** Hundenasenabdruck-Erkennungssystem nach Anspruch 4, wobei das Schlüsselpunkterfassungsmodul Folgendes umfasst:

ein Schlüsselpunktbestimmungsmodul, das zum Eingeben der Vielzahl von zu erkennenden regionalen Bildern in ein trainiertes Schlüsselpunkterkennungsmodell nacheinander, um Schlüsselpunkte zu erhalten, die dem zu erkennenden regionalen Bild entsprechen, ausgelegt ist;
ein erstes Kennzeichnungsmodul, das zum Markieren der Schlüsselpunkte, die jedem zu erkennenden regionalen Bild entsprechen, mit einer regionalen Kennzeichnung, um die Schlüsselpunkte mit der regionalen Kennzeichnung entsprechend dem zu erkennenden regionalen Bild zu erhalten, ausgelegt ist;

ein Region-Extraktionsmodul, das zum Extrahieren einer voreingestellten Schlüsselpunktreferenzregion ausgelegt ist, die dem zu erkennenden regionalen Bild entspricht, wobei die Schlüsselpunktreferenzregion die gleiche Kennzeichnung wie die regionale Kennzeichnung aufweist;

ein zweites Kennzeichnungsmodul, das zum Planen des zu erkennenden regionalen Bilds mit den Schlüsselpunkten mit der regionalen Kennzeichnung zur Schlüsselpunktreferenzregion mit der gleichen regionalen Kennzeichnung nach einem Grundsatz der regionalen Kennzeichnungsübereinstimmung ausgelegt ist;

ein Ausrichtungsmodul, das zum Ausrichten der dem zu erkennenden regionalen Bild entsprechenden Schlüsselpunkte mit den Schlüsselpunktreferenzpositionen, die in der entsprechenden Schlüsselpunktreferenzregion enthalten sind, und Ausrichten der Vielzahl von zu erkennenden regionalen Bildern mit Standardpositionen der zu erkennenden regionalen Bilder mittels des Ausrichtens der Schlüsselpunkte mit den Schlüsselpunktreferenzpositionen ausgelegt ist.

6. Hundenasenabdruck-Erkennungssystem nach Anspruch 4, wobei das Erkennungsmodul Folgendes umfasst:

ein Vektorextraktionsmodul, das zum Eingeben der zu erkennenden ausgerichteten regionalen Bilder in ein trainiertes Merkmalsextraktionsmodell, um einen Hundenasenabdruck-Merkmalsvektor zu extrahieren, um Nasenabdruck-Merkmalsvektoren eines zu testenden Hunds zu erhalten, ausgelegt ist;

ein Merkmalvergleichsmodul, das zum Vergleichen des Nasenabdruck-Merkmalsvektors des zu testenden Hunds mit einem Referenz-Hundenasenabdruck-Merkmalsvektor, der in einer voreingestellten Hundenasenabdruck-Merkmalsvektor-Bibliothek gespeichert ist, in Bezug auf den Abstand und Heranziehen des Referenz-Hundenasenabdruck-Merkmalsvektors mit dem nächsten Abstand zum Nasenabdruck-Merkmalsvektor des zu testenden Hunds als Ziel-Hundenasenabdruck-Merkmalsvektor ausgelegt ist;

ein Identitätserkennungsmodul, das zum Auswählen des Ziel-Hundenasenabdruck-Merkmalsvektors und Abrufen von Hundeidentitätsinformationen, die dem Ziel-Hundenasenabdruck-Merkmalsvektor entsprechen, aus der Hundenasenabdruck-Merkmalsvektorbibliothek ausgelegt ist.

## Revendications

1. Procédé de reconnaissance d'empreinte nasale de chien, comprenant :

la collecte d'une image de nez d'un chien, l'acquisition de l'image de nez et le traitement de l'image de nez pour obtenir une pluralité d'images régionales à reconnaître ;

la réalisation d'une détection de point clé sur la pluralité d'images régionales à reconnaître pour obtenir des points clés correspondant aux images régionales à reconnaître, et l'utilisation des points clés pour réaliser un traitement d'alignement des images régionales à reconnaître pour obtenir des images régionales alignées à reconnaître ; et

la réalisation d'une extraction et d'une reconnaissance de vecteur de caractéristiques d'empreinte nasale de chien sur les images régionales alignées à reconnaître, et la détermination d'un résultat de reconnaissance d'identité de chien par l'extraction et la reconnaissance du vecteur de caractéristiques d'empreinte nasale de chien,

dans lequel l'étape de traitement de l'image de nez pour obtenir une pluralité d'images régionales à reconnaître comprend :

la réalisation d'un procédé de contour de bord sur l'image de nez pour obtenir une région globale de nez délimitée par un contour de nez ;

la réalisation d'un procédé de division de région d'image sur la région globale de nez pour obtenir la pluralité d'images régionales à reconnaître, comprenant :

la reconnaissance et le marquage de lignes de contour d'une narine gauche et d'une narine droite dans la région globale de nez pour obtenir une position d'une ligne de contour de la narine gauche et une position d'une ligne de contour de la narine droite, et une ligne centrale entre la narine gauche et la narine droite, et prise de la ligne centrale entre la narine gauche et la narine droite comme ligne centrale de la région globale de nez ;

l'alignement d'un point le plus élevé de la ligne de contour de la narine gauche avec un point le plus élevé de la ligne de contour de la narine droite pour obtenir une ligne élevée horizontale, et l'extraction d'une position d'un point d'intersection de la ligne élevée horizontale et de la ligne centrale de la région globale de nez comme première position de point d'intersection ;

l'extraction d'une position d'un point d'intersection de la ligne centrale de la région globale de nez et d'une ligne de contour supérieure de la région globale de nez comme deuxième position de point d'intersection ;

l'alignement du point le plus élevé de la ligne de contour de la narine gauche et du point le plus élevé de la ligne de contour de la narine droite avec la deuxième position de point d'intersection respectivement, pour obtenir respectivement un angle inclus entre une ligne reliant le point le plus élevé de la ligne de contour de la narine gauche à la deuxième position de point d'intersection et la ligne élevée horizontale, et un angle inclus entre une ligne reliant le point le plus élevé de la ligne de contour de la narine droite à la deuxième position de point d'intersection et la ligne élevée horizontale;

l'utilisation des angles inclus et d'un modèle de détermination d'angle inclus de point central pour obtenir une position d'un point central sur la ligne centrale de la région globale de nez ; simultanément, l'utilisation d'une distance entre la première position de point d'intersection et la deuxième position de point d'intersection conjointement avec un modèle de détermination de rayon pour obtenir un rayon, dans lequel le modèle de détermination d'angle inclus de point central et le modèle de détermination de rayon sont comme suit respectivement :

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

où $V$ représente un angle inclus entre une ligne reliant le point central au point le plus élevé de la ligne de contour de la narine gauche ou le point le plus élevé de la ligne de contour de la narine droite et la ligne élevée horizontale ; $\alpha_1$ et $\alpha_2$ représentent respectivement l'angle inclus entre la ligne reliant le point le plus élevé de la ligne de contour de la narine gauche à la deuxième position de point d'intersection et la ligne élevée horizontale, et l'angle inclus entre la ligne reliant le point le plus élevé de la ligne de contour de la narine droite à la deuxième position de point d'intersection et la ligne élevée horizontale ; $\alpha_0$ représente une valeur de comparaison de référence d'angle inclus avec une plage de valeurs de 17,8°-25,2° ; et si $\alpha_1$ et $\alpha_2$ sont égaux, alors $(\min(\alpha_1, \alpha_2) - \alpha_0)/(\max(\alpha_1, \alpha_2) - \alpha_0) = 0,1$ ; $R$ représente le rayon ; $L$ représente la première distance entre la première position de point d'intersection et la deuxième position de point d'intersection ;

la prise du point central comme centre de cercle pour former une première région à reconnaître sur la base du rayon, et l'utilisation de la première région à reconnaître pour intercepter une première image régionale à reconnaître dans la région globale de nez ;

l'alignement d'un point le plus bas de la ligne de contour de la narine gauche avec un point le plus bas de la ligne de contour de la narine droite pour obtenir une ligne inférieure horizontale, et l'extraction d'une position d'un point d'intersection de la ligne inférieure horizontale et de la ligne centrale de la région globale de nez comme troisième position de point d'intersection ;

l'extraction d'une distance la plus courte entre le point le plus bas de la ligne de contour de la narine gauche et de la ligne centrale de la région globale de nez et une distance la plus courte entre le point le plus bas de la ligne de contour de la narine droite et de la ligne centrale de la région globale de nez, respectivement ; la prise de la troisième position de point d'intersection comme centre de cercle, la prise de la distance la plus courte entre le point le plus bas de la ligne de contour de la narine gauche et de la ligne centrale de la région globale de nez comme axe majeur et la prise de la distance la plus courte entre le point le plus bas de la ligne de contour de la narine droite et de la ligne centrale de la région globale de nez comme axe mineur, pour former une région elliptique longitudinale, l'utilisation de la région elliptique longitudinale comme deuxième région à reconnaître, et l'utilisation de la deuxième région à reconnaître pour intercepter une deuxième image régionale à reconnaître dans la région globale de nez.

2. Procédé de reconnaissance d'empreinte nasale de chien selon la revendication 1, dans lequel l'étape de réalisation d'une détection de point clé sur la pluralité d'images régionales à reconnaître pour obtenir des points clés correspondant aux images régionales à reconnaître, et l'utilisation des points clés pour réaliser un traitement d'alignement des images régionales à reconnaître pour obtenir des images régionales alignées à reconnaître comprend :

l'entrée de la pluralité d'images régionales à reconnaître dans un modèle de détection de point clé entraîné en séquence pour obtenir des points clés correspondant à l'image régionale à reconnaître ;

le marquage des points clés correspondant à chaque image régionale à reconnaître avec une étiquette régionale pour obtenir les points clés avec l'étiquette régionale correspondant à l'image régionale à reconnaître ;

l'extraction d'une région de référence de point clé prédéfinie correspondant à l'image régionale à reconnaître, dans lequel la région de référence de point clé a la même étiquette que l'étiquette régionale ;

la planification de l'image régionale à reconnaître avec les points clés avec l'étiquette régionale à la région de référence de point clé avec la même étiquette régionale, selon un principe de cohérence d'étiquette régionale ;

l'alignement des points clés correspondant à l'image régionale à reconnaître avec des positions de référence de points clés contenus dans la région de référence de point clé correspondante, et l'alignement de la pluralité d'images régionales à reconnaître avec des positions standard des images régionales à reconnaître par alignement des points clés avec les positions de référence de point clé.

3. Procédé de reconnaissance d'empreinte nasale de chien selon la revendication 1, dans lequel l'étape de réalisation d'une extraction et d'une reconnaissance de vecteur de caractéristiques d'empreinte nasale de chien sur les images régionales alignées à reconnaître, et de détermination d'un résultat de reconnaissance d'identité de chien par l'extraction et la reconnaissance de vecteur de caractéristiques d'empreinte nasale de chien comprend :

l'entrée des images régionales alignées à reconnaître dans un modèle d'extraction de caractéristiques entraîné pour extraire un vecteur de caractéristiques d'empreinte nasale de chien, pour obtenir des vecteurs de caractéristiques d'empreinte nasale d'un chien à tester ;

la comparaison du vecteur de caractéristiques d'empreinte nasale du chien à tester avec un vecteur de caractéristiques d'empreinte nasale de chien de référence stocké dans une bibliothèque de vecteurs de caractéristiques d'empreinte nasale de chien prédéfinie en termes de distance, et la prise du vecteur de caractéristiques d'empreinte nasale de chien de référence avec une distance la plus proche du vecteur de caractéristiques d'empreinte nasale du chien à tester comme vecteur de caractéristiques d'empreinte nasale de chien cible ;

la sélection du vecteur de caractéristiques d'empreinte nasale de chien cible, et la récupération d'une information d'identité de chien correspondant au vecteur de caractéristiques d'empreinte nasale de chien cible à partir de la bibliothèque de vecteurs de caractéristiques d'empreinte nasale de chien.

4. Système de reconnaissance d'empreinte nasale de chien, comprenant :

un module d'acquisition d'image, configuré pour collecter une image de nez d'un chien, acquérir l'image de nez et traiter l'image de nez pour obtenir une pluralité d'images régionales à reconnaître ;

un module d'acquisition de point clé, configuré pour réaliser une détection de point clé sur la pluralité d'images régionales à reconnaître pour obtenir des points clés correspondant aux images régionales à reconnaître, et utiliser les points clés pour réaliser un traitement d'alignement des images régionales à reconnaître pour obtenir des images régionales alignées à reconnaître ; et

un module de reconnaissance, configuré pour réaliser une extraction et une reconnaissance de vecteur de caractéristiques d'empreinte nasale de chien sur les images régionales alignées à reconnaître, et déterminer un résultat de reconnaissance d'identité de chien par l'extraction et la reconnaissance de vecteur de caractéristiques d'empreinte nasale de chien,

dans lequel le module d'acquisition d'image comprend :

un module de traitement de contour, configuré pour réaliser un procédé de contour de bord sur l'image de nez pour obtenir une région globale de nez délimitée par un contour de nez ;

un module de traitement de division, configuré pour réaliser un procédé de division de région d'image sur la région globale de nez pour obtenir la pluralité d'images régionales à reconnaître, et comprenant :

un premier module de traitement de position, configuré pour reconnaître et marquer des lignes de contour d'une narine gauche et d'une narine droite dans la région globale de nez pour obtenir une position d'une ligne de contour de la narine gauche et une position d'une ligne de contour de la narine droite, et une ligne centrale entre la narine gauche et la narine droite, et prendre la ligne centrale entre la narine gauche et la narine droite comme ligne centrale de la région globale de nez ;

un premier module d'acquisition de position de point d'intersection, configuré pour aligner un point le plus élevé de la ligne de contour de la narine gauche avec un point le plus élevé de la ligne de contour de la narine droite pour obtenir une ligne élevé horizontale, et extraire une position d'un point d'intersection de la ligne élevée horizontale et de la ligne centrale de la région globale de nez comme première position de point d'intersection ;

un deuxième module d'acquisition de position de point d'intersection, configuré pour extraire une position d'un point d'intersection de la ligne centrale de la région globale de nez et d'une ligne de contour supérieure de la région globale de nez comme deuxième position de point d'intersection ;

un deuxième module de traitement de position, configuré pour aligner le point le plus élevé de la ligne de contour de la narine gauche et le point le plus élevé de la ligne de contour de la narine droite avec la deuxième position de point d'intersection respectivement, pour obtenir respectivement un angle inclus entre une ligne reliant le point le plus élevé de la ligne de contour de la narine gauche avec la deuxième position de point d'intersection et la ligne élevée horizontale, et un angle inclus entre une ligne reliant le point le plus élevé de la ligne de contour de la narine droite avec la deuxième position de point d'intersection et la ligne élevée horizontale ;

un module de détermination de paramètre de données, configuré pour utiliser les angles inclus et un modèle de détermination d'angle inclus de point central pour obtenir une position d'un point central sur la ligne centrale de la région globale de nez ; simultanément, utiliser une distance entre la première position de point d'intersection et la deuxième position de point d'intersection conjointement avec un modèle de détermination de rayon pour obtenir un rayon, dans lequel le modèle de détermination d'angle inclus de point central et le modèle de détermination de rayon sont comme suit respectivement :

$$V = \left(1 - \frac{\min(\alpha_1, \alpha_2) - \alpha_0}{\max(\alpha_1, \alpha_2) - \alpha_0}\right) \cdot \frac{\min(\alpha_1, \alpha_2)}{1.29 \cdot \max(\alpha_1, \alpha_2)} \cdot \left(\alpha_1 + \frac{\min(\alpha_1, \alpha_2) - \alpha_0}{\alpha_0} \cdot \alpha_2\right)$$

$$R = \left(1 + \frac{\min(\alpha_1, \alpha_2)}{1.34 \cdot \max(\alpha_1, \alpha_2)}\right) \cdot L$$

où V représente un angle inclus entre une ligne reliant le point central au point le plus élevé de la ligne de contour de la narine gauche ou le point le plus élevé de la ligne de contour de la narine droite et la ligne élevée horizontale ; $\alpha_1$ et $\alpha_2$ représentent respectivement l'angle inclus entre la ligne reliant le point le plus élevé de la ligne de contour de la narine gauche à la deuxième position de point d'intersection et la ligne élevée horizontale, et l'angle inclus entre la ligne reliant le point le plus élevé de la ligne de contour de la narine droite à la deuxième position de point d'intersection et la ligne élevée horizontale ; $\alpha_0$ représente une valeur de comparaison de référence d'angle inclus avec une plage de valeurs de 17,8°-25,2° ; et si $\alpha_1$ et $\alpha_2$ sont égaux, alors $(\min(\alpha_1, \alpha_2) - \alpha_0)/(\max(\alpha_1, \alpha_2) - \alpha_0) = 0,1$ ; R représente le rayon ; L représente la première distance entre la première position de point d'intersection et la deuxième position de point d'intersection ;

un premier module d'acquisition d'image régionale à reconnaître, configuré pour prendre le point central comme centre de cercle pour former une première région à reconnaître sur la base du rayon, et utiliser la première région à reconnaître pour intercepter une première image régionale à reconnaître dans la région globale de nez ;

un troisième module d'acquisition de position de point d'intersection, configuré pour aligner un point le plus bas de la ligne de contour de la narine gauche avec un point le plus bas de la ligne de contour de la narine droite pour obtenir une ligne inférieure horizontale, et extraire une position d'un point d'intersection de la ligne inférieure horizontale et de la ligne centrale de la région globale de nez comme troisième position de point d'intersection ;

un deuxième module d'acquisition d'image régionale à reconnaître, configuré pour extraire une distance la plus courte entre le point le plus bas de la ligne de contour de la narine gauche et la ligne centrale de la région globale de nez et une distance la plus courte entre le point le plus bas de la ligne de contour de la narine droite et la ligne centrale de la région globale de nez, respectivement ; prendre la troisième position de point d'intersection comme centre de cercle, prendre la distance la plus courte entre le point le plus bas de la ligne de contour de la narine gauche et la ligne centrale de la région globale de nez comme axe majeur et prendre la distance la plus courte entre le point le plus bas de la ligne de contour de la narine droite et la ligne centrale de la région globale de nez comme axe mineur, pour former une région elliptique longitudinale, utiliser la région elliptique longitudinale comme deuxième région à reconnaître, et utiliser la deuxième région à reconnaître pour intercepter une deuxième image régionale à reconnaître dans la région globale de nez.

**5.** Système de reconnaissance d'empreinte nasale de chien selon la revendication 4, dans lequel le module d'acquisition de point clé comprend :

un module de détermination de point clé, configuré pour entrer la pluralité d'images régionales à reconnaître dans un modèle de détection de point clé entraîné en séquence pour obtenir des points clés correspondant à l'image régionale à reconnaître ;
un premier module d'étiquetage, configuré pour marquer les points clés correspondant à chaque image régionale à reconnaître avec une étiquette régionale pour obtenir les points clés avec l'étiquette régionale correspondant à l'image régionale à reconnaître ;
un module d'extraction de région, configuré pour extraire une région de référence de point clé prédéfinie correspondant à l'image régionale à reconnaître, dans lequel la région de référence de point clé a la même étiquette que l'étiquette régionale ;
un deuxième module d'étiquetage, configuré pour planifier l'image régionale à reconnaître avec les points clés avec l'étiquette régionale à la région de référence de point clé avec la même étiquette régionale, selon un principe de cohérence d'étiquette régionale ;
un module d'alignement, configuré pour aligner les points clés correspondant à l'image régionale à reconnaître avec des positions de référence de points clés contenus dans la région de référence de point clé correspondante, et aligner la pluralité d'images régionales à reconnaître avec des positions standard des images régionales à reconnaître par alignement des points clés avec les positions de référence de point clé.

**6.** Système de reconnaissance d'empreinte nasale de chien selon la revendication 4, dans lequel le module de reconnaissance comprend :

un module d'extraction de vecteur, configuré pour entrer les images régionales alignées à reconnaître dans un modèle d'extraction de caractéristiques entraîné pour extraire un vecteur de caractéristiques d'empreinte nasale de chien, pour obtenir des vecteurs de caractéristiques d'empreinte nasale d'un chien à tester ;
un module de comparaison de caractéristiques, configuré pour comparer le vecteur de caractéristiques d'empreinte nasale du chien à tester avec un vecteur de caractéristiques d'empreinte nasale de chien de référence stocké dans une bibliothèque de vecteurs de caractéristiques d'empreinte nasale de chien prédéfinie en termes de distance, et prendre le vecteur de caractéristiques d'empreinte nasale de chien de référence avec une distance la plus proche du vecteur de caractéristiques d'empreinte nasale du chien à tester comme vecteur de caractéristiques d'empreinte nasale de chien cible ;
un module de reconnaissance d'identité, configuré pour sélectionner le vecteur de caractéristiques d'empreinte nasale de chien cible, et récupérer une information d'identité de chien correspondant au vecteur de caractéristiques d'empreinte nasale de chien cible à partir de la bibliothèque de vecteurs de caractéristiques d'empreinte nasale de chien.

collecting a nose image of a dog, acquiring the nose image, and processing the nose image to obtain a plurality of regional images to be recognized — S1

performing key point detection on the plurality of regional images to be recognized to obtain key points corresponding to the regional images to be recognized, and using the key points to perform alignment processing of the regional images to be recognized to obtain aligned regional images to be recognized — S2

performing dog nose print feature vector extraction and recognition on the aligned regional images to be recognized, and determining a dog identity recognition result through the dog nose print feature vector extraction and recognition — S3

FIG. 1

image acquisition module

contour processing module

division processing module

| first position<br>processing module | first intersection point<br>position acquisition module |
| second intersection point<br>position acquisition module | second position<br>processing module |
| data parameter<br>determination module | first to-be-recognized regional<br>image acquisition module |
| third intersection point<br>position acquisition module | second to-be-recognized regional<br>image acquisition module |

recognition module

| vector extraction module | feature comparison module |

identity recognition module

key point acquisition module

| key point determination module | first labeling module |
| second labeling module | alignment module |

region extraction module

FIG. 2

**EP 4 447 007 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102125633 B1
- CN 109543663 A
- CN 109858363 A
- EP 3029603 B1
- WO 2007077694 A1